# EUROPÄISCHE PATENTSCHRIFT

(11) **EP 3 405 759 B1**
(45) Veröffentlichungstag und Bekanntmachung des Hinweises auf die Patenterteilung: **13.10.2021**
(21) Anmeldenummer: 16834018.0
(22) Anmeldetag: 21.12.2016
(51) Int. Cl.: G01H 3/00, G01S 7/527

(54) **VERFAHREN ZUM ELIMINIEREN EINES REFERENZ-WASSERSCHALLSIGNALS SOWIE SONARVORRICHTUNG UND WASSERFAHRZEUG**
METHOD FOR ELIMINATING A REFERENCE UNDERWATER SOUND SIGNAL, SONAR DEVICE, AND WATERCRAFT
PROCÉDÉ POUR ÉLIMINER UN SIGNAL ACOUSTIQUE SOUS-MARIN DE RÉFÉRENCE, DISPOSITIF SONAR ET VÉHICULE AQUATIQUE

(30) Priorität: 19.01.2016 DE 102016100813
(43) Veröffentlichungstag der Anmeldung: 28.11.2018
(73) Patentinhaber: ATLAS ELEKTRONIK GmbH, 28309 Bremen (DE)
(72) Erfinder: MEYER, Ralf Michael, 27798 Hude (DE); WIEGAND, Till, 28215 Bremen (DE)
(74) Vertreter: thyssenkrupp Intellectual Property GmbH
(86) Internationale Anmeldenummer: PCT/DE2016/100610
(87) Internationale Veröffentlichungsnummer: WO 2017/125102

(56) Entgegenhaltungen:
- WO-A1-86/01000
- DE-A1-102014 106 351
- US-A1- 2011 002 191
- US-A1- 2011 228 639

## Beschreibung

Die Erfindung betrifft ein Verfahren zum Eliminieren eines Referenz-Wasserschallsignals aus einem ortsaufgelösten Wasserschallsignal und eine Sonarvorrichtung sowie ein Wasserfahrzeug.

Insbesondere bei Schleppsonarantennen sind die Störgeräusche des Eigenschiffs für die Detektion von Unterwasserobjekten nachteilig. Derartige Eigengeräusche können beispielsweise von Dieselmotoren, Stromgeneratoren, Schiffsschrauben und dergleichen erzeugt werden. Diese können nach dem Stand der Technik nur im begrenzten Maße vermieden werden und wirken sich somit negativ auf die Performance der eigenen Sonaranlage aus. Beispielsweise können bei einem Überwasserschiff mit angehängter Schleppsonarantenne neben der Rauschanhebung weitere negative Effekte auftreten.

In der WO 86/01000, der US 2011/002191 und der US 2011/228639 A1 sind jeweils aktive Sonare und entsprechende Verfahren zur Rauschunterdrückung offenbart. In der DE 10 2014 106 351 A1 ist ein Verfahren zum Orts- und/oder Zeitauflösen einer ersten Unterwasserschallquelle von einer zweiten Unterwasserschallquelle offenbart.

Aufgabe der Erfindung ist es, den Stand der Technik zu verbessern.

Gelöst wird die Aufgabe durch ein Verfahren gemäß Hauptanspruch und insbesondere durch ein Verfahren zum Eliminieren eines Referenz-Wasserschallsignals aus einem ortsaufgelösten Wasserschallsignal, wobei das Verfahren folgende Schritte aufweist:
- Ermitteln des ortsaufgelösten Wasserschallsignals mittels einer Unterwasserschall-Antenne, insbesondere einer Schleppsonarantenne, sodass einzelne Beams vorliegen, welche jeweils einen Teil des ortsaufgelösten Wasserschallsignals aufweisen und
- adaptives Filtern des ortsaufgelösten Wasserschallsignals in Abhängigkeit des Referenz- Wasserschallsignals.

Aufgrund dessen, dass vorliegend quasi richtungsabhängig das Eigengeräusch detektiert wird und adaptiv aus dem Signal entfernt wird, können insbesondere die Störgeräusche des Eigenschiffs eliminiert werden. Auch andere bekannte Signale können somit aus einem ortsaufgelösten Wasserschallsignal entfernt werden. Insbesondere können bekannte Signale eines Schiffes eines Schiffsverbandes entfernt werden, sodass ein Auflösen eines Schiffsverbandes möglich ist.

Folgendes Begriffliche sei erläutert:
Ein "Referenz-Wasserschallsignal" ist insbesondere ein Wasserschallsignal, welches die zu eliminierenden Störgeräusche aufweist.

Ein "ortsaufgelöstes Wasserschallsignal" ist insbesondere ein Wasserschallsignal, welches für einen bestimmten Raumwinkel aufgezeichnet wird. Somit ist beispielsweise anhand eines derartigen ortsaufgelösten Wasserschallsignals eine Peilung zu einem bestimmten Objekt möglich.

Eine "Unterwasserschall-Antenne" kann jegliche Form von Sonarantenne sein, welche ortsaufgelöste Daten ermittelt. Besonders vorteilhaft ist es, wenn es sich bei einer derartigen Unterwasserschall-Antenne um eine Schleppantenne eines Schleppsonars handelt.

Unter einem "Beam" wird ein Unterwasserschallsignal für einen sehr kleinen Raumwinkel verstanden. Durch aneinanderreihen einzelner Beams entsteht somit ein Gesamtbild des gesamten zu betrachtenden Raumwinkels. Anschaulich gesagt kann ein derartiger Beam der entsprechenden Peilung entsprechen und ist für seinen kleinen Raumwinkel ein Maß für beispielsweise die ankommende Schallenergie.

Selbstverständlich können anhand derartiger Beams auch bestimmte Frequenzmuster oder Zeitverläufe detektiert werden.

Ein "Adaptives Filtern" erfolgt insbesondere mittels eines "adaptiven Filters". Ein derartiges adaptives Filtern wird insbesondere in der digitalen Signalverarbeitung verwendet. Das adaptive Filter besitzt insbesondere die Eigenschaft, seine Übertragungsfunktion im Betrieb selbstständig verändern zu können. Beispielsweise wird zu diesem Zweck ein FIR-Filter (Filter mit endlicher Impulsantwort) mit einem Einstellnetzwerk versehen, das nach entsprechenden Regeln die Filterkoeffizienten eines Transversal-Filters (Filter mit endlicher Impulsantwort) verändern kann. Das Ermitteln des ortsaufgelösten Referenz-Wasserschallsignals kann beispielsweise messtechnisch mittels der vorliegenden Unterwasserschall-Antenne erfolgen.

In einer weiteren Ausführungsform kann das adaptive Filtern für einen Teil des ortsaufgelösten Wasserschallsignals erfolgen. So können beispielsweise Beams, welche einen vorbestimmten Raumwinkel beschreiben, welcher nicht dem gesamt zu betrachtenden Raumwinkel entspricht, mit diesem Verfahren bearbeitet werden. Der Grundgedanke dahinter liegt darin, dass im Wesentlichen nur einige Beams das eigentliche Störsignal in relevanter Größe aufweisen.

Um verschiedene Alternativen bereitstellen zu können, kann das adaptive Filtern für einen Beam oder mehrere Beams oder für sämtliche Beams durchgeführt werden.

In einer weiteren Ausführungsform ist das Referenz-Wasserschallsignal ein Teil des ermittelten ortsaufgelösten Wasserschallsignals. Somit können insbesondere einige Beams für das Ermitteln des Wasserschall-Referenzsignals verwendet werden, während die anderen Beams für das eigentliche Messen verwendet werden. Zwar kann dann nicht mehr der gesamte Raumwinkel betrachtet werden, da einige Beams für das Wasserschall-Referenzsignal verwendet werden, jedoch kann bei den anderen Beams gewährleistet werden, dass Störung aufgrund von beispielsweise Eigengeräuschen aus den übrigen Beams eliminiert sind.

Auch kann das Referenz-Wasserschallsignal ein Signal oder Teilsignal eines Beams oder mehrerer Beams sein. So können beispielsweise lediglich einige Frequenzen der Beams für das adaptive Filtern verwendet werden.

Um das adaptive Filtern mittels eines einfachen Algorithmus zu realisieren, kann das adaptive Filtern mittels eines mathematischen Least-Mean-Square-Algorithmus oder mittels eines mathematischen Recursive-Least-Squares-algorithmus realisiert werden.

In einem weiteren Aspekt der Erfindung kann das Verfahren zum Eliminieren eines Referenz-Wasserschallsignals aus einem ortsaufgelösten Wasserschallsignal für ein Verfahren zum Auflösen eines Schiffverbandes mit mindestens zwei Schiffen eingesetzt werden, wobei das referenz-Wasserschallsignal von einem Schiff des Schiffsverbandes oder mehreren Schiffen des Schiffsverbandes stammt.

Insbesondere für den militärischen Aspekt, dass Schiffsverbände aufgelöst werden müssen, um beispielsweise ein spezielles Ziel oder ein speziell zu beobachtendes Schiff ausfindig zu machen, ist hier das Verfahren sinnvoll. So können insbesondere bei größeren Schiffsverbänden Schiffe, deren Schallsignatur bekannt ist, beziehungsweise deren Schallsignatur leicht messbar ist, aus dem Gesamtsignal eliminiert werden, sodass die Peilung eines einzelnen Schiffes aus dem Schiffsverband möglich ist.

In einem weiteren Aspekt wird die Aufgabe gelöst durch eine Sonarvorrichtung mit einer Sonarantenne, insbesondere Schleppantenne, und einem Rechner, wobei die Sonarvorrichtung derart eingerichtet ist, dass ein zuvor beschriebenes Verfahren zum Eliminieren eines Referenz-Wasserschallsignals aus einem ortsaufgelösten Wasserschallsignal oder ein zuvor beschriebenes Verfahren zum Auflösen eines Schiffsverbandes durchführbar ist.

In einem abschließenden Aspekt wird die Aufgabe gelöst durch ein Wasserfahrzeug, insbesondere Schleppschiff, welches eine zuvor beschriebene Sonarvorrichtung aufweist.

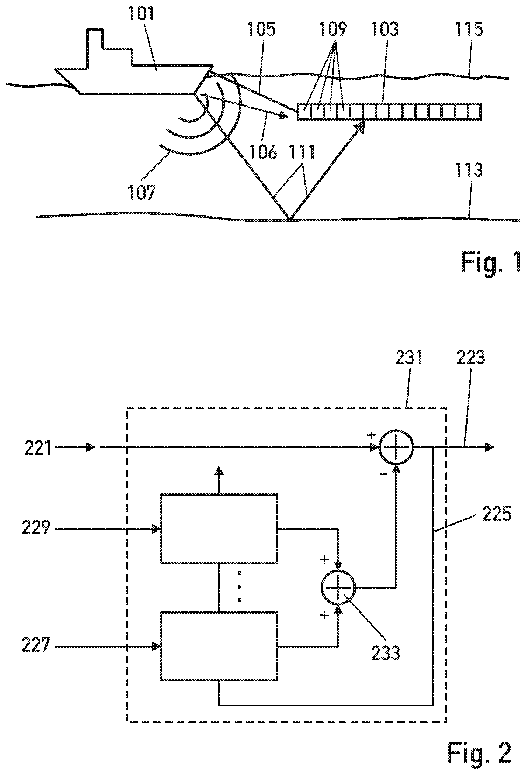

Im Weiteren wird die Erfindung anhand eines Ausführungsbeispiels näher erläutert. Es zeigen
- Figur 1: ein Schleppschiff mit einem Schleppsonar und
- Figur 2: eine stark schematische Darstellung des adaptiven Filters.

Ein Schiff 101 schleppt mittels eines Schleppkabels 105 eine Schleppantenne 103. Die Schleppantenne 103 weist mehrere hintereinander angeordnete Hydrophone 109 auf.

Ein derartig realisiertes Schleppsonar eignet sich für das ortsaufgelöste Detektieren von Überwasser- oder Unterwasserobjekten.

Das Schiff 101 sendet Eigengeräusche aus, welche als Schiffsschallemissionen 107 unter die Wasseroberfläche 115 in das Gewässer eingebracht werden. Zusätzlich zum direkten Empfangspfad 106, kann auch aufgrund der Bodenreflexion 111 die Schleppsonarantenne 103 Unterwasserschallsignale empfangen, welche die Schiffsschallemissionen 107 aufweisen.

Vorliegend werden zwei Beams aus den mittels der Schleppsonarantenne 103 gewonnenen Daten für das Eliminieren der Schiffsschallemissionen 107 verwendet. Insbesondere werden die Beams verwendet, welche ausgehend von der Schleppsonarantenne 103 in Peilung des Schiffs 101 zeigen. Vorliegend wird davon ausgegangen, dass dies die Beams sind, welche die größten Signalanteile mit Schiffsschallemissionen 107 aufweisen.

Die mittels der beiden Beams gemessenen Wasserschallsignale werden aufgeteilt und einmal als Referenzsignal des einen Beams 229 und einmal als Referenzsignal des zweiten Beams 227 gefiltert. Die Filterausgänge werden anschließend zusammengeführt 233.

Die Signale der übrigen Beams werden im Weiteren als Nutzsignal 221 bezeichnet. Mittels der Referenzsignale 229, 227 erfolgt ein adaptives Filtern mittels eines Least-Means-Square-Algorithmus. Die Rückkopplung 225 ist die Grundlage zur Adaptierung der Filterkoeffizienten.

### Bezugszeichenliste

- 101: Schiff
- 103: Schleppsonarantenne
- 105: Schleppkabel
- 106: Direkter Empfangspfad
- 107: Schiffschallemissionen
- 109: Hydrophone
- 111: Reflexion der Schiffsschallemissionen
- 113: Meeresboden
- 115: Wasseroberfläche
- 221: Nutzsignal
- 223: Ausgangsdaten
- 225: Rückkopplung
- 227: Weiteres Referenzsignal eines weiteren Beams
- 229: Referenzsignal eines Beams
- 231: Adaptives Filtern
- 233: Zusammenführung der Filterausgänge

## Patentansprüche

1. Verfahren zum Eliminieren eines Referenz-Wasserschallsignals aus einem ortsaufgelösten Wasserschallsignal, wobei das Referenz-Wasserschallsignal ein Störgeräusch eines Eigenschiffes oder das bekannte Signal eines Schiffes ist und das Verfahren folgende Schritte aufweist:
- Ermitteln des ortsaufgelösten Wasserschallsignals mittels einer Unterwasserschall-Antenne, sodass einzelne Beams vorliegen, welche jeweils einen Teil des ortsaufgelösten Wasserschallsignals aufweisen und
- adaptives Filtern des ortsaufgelösten Wasserschallsignals in Abhängigkeit des Referenz-Wasserschallsignals, sodass ein adaptives Entfernen des Störgeräuschs des Eigenschiffes oder des bekannten Signals des Schiffes erfolgt.

2. Verfahren nach Anspruch 1, **dadurch gekennzeichnet, dass** das adaptive Filtern für einen Teil des ortsaufgelösten Wasserschallsignals erfolgt.

3. Verfahren nach Anspruch 2, **dadurch gekennzeichnet, dass** das adaptive Filtern für einen Beam oder mehrere Beams oder sämtliche Beams durchgeführt wird.

4. Verfahren nach einem der vorherigen Ansprüche, **dadurch gekennzeichnet, dass** das Referenz-Wasserschallsignal ein Teil des ermittelten ortsaufgelösten Wasserschallsignals ist.

5. Verfahren nach Anspruch 4, **dadurch gekennzeichnet, dass** das Referenz-Wasserschallsignal ein Signal oder Teilsignal eines Beams oder mehrerer Beams ist.

6. Verfahren nach einem der vorherigen Ansprüche, **dadurch gekennzeichnet, dass** das adaptive Filtern mittels eines mathematischen Least-Mean-Squares-Algorithmus oder mittels eines mathematischen Recursive-Least-Squares-Algorithmus realisiert wird.

7. Verfahren zum Auflösen eines Schiffsverbandes mit mindestens zwei Schiffen, wobei das Verfahren ein Verfahren zum Eliminieren eines Referenz-Wasserschallsignals aus einem ortsaufgelösten Wasserschallsignal nach einem der vorherigen Ansprüche umfasst und das Referenz-Wasserschallsignal von einem Schiff des Schiffsverbandes oder mehreren Schiffen des Schiffsverbandes stammt.

8. Sonarvorrichtung mit einer Sonarantenne, und einem Rechner, wobei die Sonarvorrichtung derart eingerichtet ist, dass ein Verfahren zum Eliminieren eines Referenz-Wasserschallsignals aus einem ortsaufgelösten Wasserschallsignal nach einem der Ansprüche 1 bis 6 oder ein Verfahren zum Auflösen eines Schiffsverbandes nach Anspruch 7 durchführbar ist.

9. Wasserfahrzeug, welches eine Sonarvorrichtung nach Anspruch 8 aufweist.

## Claims

1. Method for eliminating a reference waterborne acoustic signal from a spatially resolved waterborne acoustic signal, wherein the reference waterborne acoustic signal is interference noise of an ego ship or the known signal of a ship and the method comprises the following steps:
- determining the spatially resolved waterborne acoustic signal by way of an underwater sound antenna, such that individual beams are present, each comprising a part of the spatially resolved waterborne acoustic signal, and
- adaptively filtering the spatially resolved waterborne acoustic signal on the basis of the reference waterborne acoustic signal, so as to adaptively remove the interference noise of the ego ship or the known signal of the ship.

2. Method according to Claim 1, **characterized in that** the adaptive filtering is performed for part of the spatially resolved waterborne acoustic signal.

3. Method according to Claim 2, **characterized in that** the adaptive filtering is performed for one beam or several beams or all beams.

4. Method according to one of the preceding claims, **characterized in that** the reference waterborne acoustic signal is part of the determined spatially resolved waterborne acoustic signal.

5. Method according to Claim 4, **characterized in that** the reference waterborne acoustic signal is a signal or partial signal of one beam or of several beams.

6. Method according to one of the preceding claims, **characterized in that** the adaptive filtering is performed by way of a mathematical least mean squares algorithm or by way of a mathematical recursive least squares algorithm.

7. Method for resolving a group of ships containing at least two ships, wherein the method comprises a method for eliminating a reference waterborne acoustic signal from a spatially resolved waterborne acoustic signal according to one of the preceding claims and the reference waterborne acoustic signal originates from a ship from the group of ships or several ships from the group of ships.

8. Sonar device having a sonar antenna and a computer, wherein the sonar device is configured such that it is possible to perform a method for eliminating a reference waterborne acoustic signal from a spatially resolved waterborne acoustic signal according to one of Claims 1 to 6 or a method for resolving a group of ships according to Claim 7.

9. Watercraft having a sonar device according to Claim 8.

## Revendications

1. Procédé permettant d'éliminer un signal acoustique sous-marin de référence d'un signal acoustique sous-marin à résolution spatiale, le signal acoustique sous-marin de référence présentant un bruit parasite d'un navire ego ou étant le signal connu d'un navire, et le procédé présentant les étapes suivantes :
- la détermination du signal acoustique sous-marin à résolution spatiale au moyen d'une antenne acoustique sous-marine, de sorte qu'il existe des faisceaux individuels qui présentent respectivement une partie du signal acoustique sous-marin à résolution spatiale, et
- le filtrage adaptatif du signal acoustique sous-marin à résolution spatiale en fonction du signal acoustique sous-marin de référence de sorte qu'une élimination adaptative du bruit parasite du navire ego ou du signal connu du navire est effectuée.

2. Procédé selon la revendication 1, **caractérisé en ce que** le filtrage adaptatif est effectué pour une partie du signal acoustique sous-marin à résolution spatiale.

3. Procédé selon la revendication 2, **caractérisé en ce que** le filtrage adaptatif est effectué pour un faisceau ou pour plusieurs faisceaux ou pour tous les faisceaux.

4. Procédé selon l'une quelconque des revendications précédentes, **caractérisé en ce que** le signal acoustique sous-marin de référence fait partie du signal acoustique sous-marin à résolution spatiale déterminé.

5. Procédé selon la revendication 4, **caractérisé en ce que** le signal acoustique sous-marin de référence est un signal ou un signal partiel d'un faisceau ou de plusieurs faisceaux.

6. Procédé selon l'une quelconque des revendications précédentes, **caractérisé en ce que** le filtrage adaptatif est réalisé au moyen d'un algorithme mathématique des moindres carrés moyens ou au moyen d'un algorithme mathématique des moindres carrés récursifs.

7. Procédé permettant de dissoudre un convoi de navires comprenant au moins deux navires, le procédé comprenant un procédé permettant d'éliminer un signal acoustique sous-marin de référence d'un signal acoustique sous-marin à résolution spatiale selon l'une quelconque des revendications précédentes, et le signal acoustique sous-marin de référence provenant d'un navire du convoi de navires ou de plusieurs navires du convoi de navires.

8. Sonar comprenant une antenne sonar et un ordinateur, le sonar étant aménagé de telle sorte qu'un procédé permettant d'éliminer un signal acoustique sous-marin de référence d'un signal acoustique sous-marin à résolution spatiale selon l'une quelconque des revendications 1 à 6 ou un procédé permettant de dissoudre un convoi de navires selon la revendication 7 peut être effectué.

9. Bateau présentant un sonar selon la revendication 8.
